# EUROPEAN PATENT APPLICATION

(11) **EP 3 220 329 A1**
(43) Date of publication of application: **20.09.2017**
(21) Application number: 17161580.0
(22) Date of filing: 17.03.2017
(51) Int. Cl.: G06Q 10/08, B64F 1/36

(54) **IMPROVED BAGGAGE DROP SYSTEM**

(30) Priority: 18.03.2016 HK 16103217
(71) Applicant: Airport Authority, Lantau (HK)
(72) Inventor: WONG, Alice C.F., Lantau (HK)
(74) Representative: Noble, Nicholas

(57) **Abstract**

An improved baggage drop system, method of modification, baggage counter and retrofit system for receiving baggage from a passenger are disclosed. In one aspect the baggage drop system includes a housing adjacent a conveyor system. A first system is operable by the passenger to generate a baggage tag upon receipt of passenger information, and also actuates the conveyor system. A second system is operable by a second person to generate a printed baggage label, and to actuate the conveyor system. Only one of the first system and the second system is operable at a single point in time.

## Description

### FIELD OF THE INVENTION

The present invention relates to an improved baggage drop system and method for receiving baggage from passengers.

### BACKGROUND OF THE INVENTION

Passenger facilities for checking in passengers and accompanying baggage for an onward journey typically require multiple check-in personnel, each staffing a physical counter to process a large number of passengers simultaneously. It would be appreciated that the processing time is a function of the numbers of staff and associated counters, with more staff (and associated physical counters) relative to the overall passenger numbers reducing queueing time.

In the case of airports and other transportation hubs, seasonal periods of peak passenger travel (e.g. Christmas or New Year Holidays) and a limited availability of counters and/or staff increase passenger waiting times with long queues, increasing frustration and dissatisfaction with the overall travel experience. Conversely, in periods of low passenger travel, a significant physical space is occupied by counters which are not used, and/or have idle staff members who are not processing passengers.

In an effort to reduce staffing costs and limit the physical space occupied by check-in counters, some airlines and transportation hubs have begun to implement self-service electronic kiosks which conduct the initial boarding stages, including issuing boarding passes based upon customer supplied documents or personal electronic devices having appropriate barcodes.

However, even after a passenger is processed via such self-service electronic kiosk, typically such systems still rely upon a passenger's accompanying baggage to be dropped by the passenger at baggage drop counters operated or supervised by a staff member. The staff member ensures that any passenger issues that arise during the baggage drop process can be readily addressed, as well as ensuring passengers do not intrude onto the conveyor system which receives the baggage. A disadvantage of such a system is that it can merely transfer the bottleneck in processing time from the check-in stage to the baggage drop stage.

New systems have been developed in which both the check-in and the baggage drop stages are substantially automated. However, such systems typically require substantial modification and or replacement of existing counters and have a high installation cost. In the event of a system error (which inevitably occurs at peak passenger usage times) such systems are also usually unable to be operated in a manual mode by a staff member.

### SUMMARY OF THE INVENTION

An object of the invention to at least partially address or alleviate at least some of the identified problems of the known baggage drop systems.

In a broad form of the invention there is provided a baggage drop system for receiving baggage from a passenger comprising:
a housing adjacent a conveyor system for receiving baggage, and including first and second systems, wherein
said first system is operable by the passenger to generate a baggage identification tag upon receipt of passenger information, and to actuate the conveyor system upon determination that baggage parameters are within pre-determined limits;
said second system is operable by a second person to generate a printed baggage label upon receipt of passenger information, and being operable by the second person to actuate the conveyor system,
wherein the first system and the second system are independently operable.

The first system may include a display movable from an inoperative position proximal the housing to an operational position above the conveyor system. The display may be mounted to a movable member, said movable member pivoting from the inoperative position proximal the housing to an operational position extending above the conveyor system. The display may be movable to an operational position by rotating the display about the movable member and pivoting the movable member away from the housing.

The baggage drop system may further comprise an image acquisition device which is mounted to the display such that when the display is in an operational position the image acquisition device captures an image of the baggage. The image may be linked to passenger information provided to the first system.

The display may be a touch screen display for receiving passenger input and displaying system information.

The baggage drop system may include a scanner. The baggage drop system may include a recess in the housing for receiving the scanner therein.

The display may be arranged in an inoperative position to substantially cover the recess and scanner. The scanner may be configured to detect passenger information and to encode passenger information on the baggage identification tag. The baggage identification tag may comprises a pouch for receiving a printed baggage label and an encodeable RFID tag. Baggage size parameters may be detected by detectors mounted to the housing. The detectors may be infrared detectors. A first infrared detector may be arranged on the side of a housing of a first baggage drop system and a second infrared detector may be arranged on the housing of an adjacent baggage drop system.

The housing may include at least one or more apertures arranged to receive one or more of baggage labels or baggage claim receipts from a printer of the first system.

The conveyor system may include three independently actuable belts. A first baggage item on a second conveyor belt may be returned to the passenger where the combined parameters of the first item of baggage and second item of baggage exceed a pre-determined limit.

The baggage drop system may further comprise a switch, wherein upon actuation of the switch one of the first system and second system is rendered inoperable and the other is activated.

The first system and the second system may be independently operable at different times.

According to a further aspect there is provided a baggage drop counter for receiving baggage from a passenger comprising:
a housing adjacent a conveyor system for receiving baggage;
a first display mounted to the housing, the first display being movable from a passenger operable position above the conveyor system to an inoperative position proximal the housing;
a first scanner disposed in the housing for receiving passenger identification information;
a computing means for receiving passenger information and detecting baggage weight and size information from sensors and upon determination that the baggage parameters fall below pre-determined limits, actuating the conveyor system;
a baggage identification tag generator operable by a passenger;
a second display arranged for displaying information to a second person;
a second computing means for receiving passenger information; and for enabling the second person to actuate the conveyor system;
a printer for generating a printed baggage label, baggage receipt and boarding pass information upon selection by a second person; and
a switch for changing the baggage drop system from the first system to the second system.

The baggage identification tag generator may include a baggage label printer operable by a passenger. Optionally, the first scanner may be configured for detecting passenger information and encoding a memory device in the baggage identification tag.

According to a further aspect, there is provided a method of modifying the operation of a baggage drop counter having a housing and a conveyor system, so that the baggage drop counter provides passenger operable baggage drop operation and assisted baggage drop operations at separate times, the method comprising:
installing a display movable between an operative position above the conveyor system and an inoperative position proximal the housing; and
providing a computing means connected to network information, and configured to receive passenger information and baggage parameters, and generate a baggage identification tag.

The method may further comprise the step of generating a baggage label by a label printer in the housing accessible to a passenger.

The method may further include providing a scanning device connected to the computing means.

The baggage identification tag may be generated by encoding an RFID tag using a passenger operable scanner.

The method may further include installing an image acquisition device in communication with the computing means.

According to a further aspect, there is provided a retrofit baggage drop system for use with an existing baggage counter, the existing baggage counter having a housing adjacent a conveyor system for receiving baggage, and comprising an existing display, a baggage label printer and a computer, the retrofit baggage drop system comprising:
a system operable by the passenger to generate a baggage identification tag upon receipt of passenger information, said system actuating the conveyor system upon determination that baggage parameters are below pre-determined limits wherein the existing system and the system operable by the passenger are independently operable.

The retrofit baggage drop system may further comprise:
a second display mounted to the housing, the second display being movable from a passenger operable position above the conveyor system to an inoperative position proximal the housing.

The retrofit baggage drop system may further comprise:
a scanner disposed in the housing for receiving passenger identification information;
a computing means for receiving passenger information and detecting baggage weight and size information from sensors and upon determination that the baggage parameters fall below pre-determined limits, actuating the conveyor system; and
a second printer for generating a printed baggage label for a passenger upon selection by a passenger.

The retrofit baggage drop system may further comprise:
a computing means for receiving passenger information and detecting baggage weight and size information from sensors; and
a scanner disposed in the housing for receiving passenger identification information and encoding a baggage identification tag;
wherein upon determination that the baggage parameters fall below pre-determined limits, the computing means actuates the conveyor system.

The retrofit baggage system may further comprise an image acquisition device mounted to the display such that when the display in an operative position, the image acquisition device captures an image of the baggage.

The retrofit baggage drop system may include a recess in the housing for receiving a scanner therein.

The display may be arranged in an inoperative position to substantially cover the recess and scanner.

The system operable by the passenger and the existing system may be independently operable at different times.

### BRIEF DESCRIPTION OF THE DRAWINGS

The invention will now be described by reference (but without limitation to) the accompanying figures in which:
Fig. 1 a is a perspective view of a baggage drop system in accordance with an embodiment of the present invention as seen by a passenger when in an assisted bag drop configuration.
Fig. 1b is the view of a baggage drop system of Fig 1 a as seen by a staff member.
Fig. 2a is a perspective view of a baggage drop system in accordance with an embodiment of the present invention from a passenger perspective during change from an assisted bag drop configuration to a self check-in configuration.
Fig. 2b is a perspective view of a baggage drop system of Fig 2a as seen by a staff member.
Fig. 3a is a perspective view of a baggage drop system in accordance with an embodiment of the present invention in a self check-in configuration.
Fig. 3b is the view of a baggage drop system of Fig 2a from a staff member perspective behind the counter.
Fig. 4 is an enlarged side view of an exemplary scanner depicted in Figs. 1 -3 when the baggage drop system is in the self check- in configuration.
Fig. 5a is an operational view of a printer drawer for receiving a printer in an embodiment of the invention.
Fig. 5b is a view of an exemplary printer drawer of Fig. 5a in an opened state.
Fig. 6 is a view of an exemplary RFID encodeable baggage tag with details which are printed by the passenger in an additional embodiment of the baggage drop system.
Fig. 7a is a perspective view of an embodiment of the baggage drop system in a self check-in configuration depicting multiple conveyor systems as seen by a passenger.
Fig. 7b is a perspective view of the baggage drop system of Fig. 7a as seen by a staff member.
Fig. 8a is a schematic representation of a successful process for passenger baggage drop with multiple baggage items when the system is in a self check-in configuration.
Fig. 8b is a schematic representation of an unsuccessful passenger baggage drop with multiple baggage items when the system is in a self check-in configuration.
Fig. 9 is a schematic flowchart setting out the main steps according to an embodiment of the bag drop system of present invention.

### DETAILED DESCRIPTION OF THE PREFERRED EMBODIMENTS

In a broad aspect of the present invention there is provided a baggage drop system, baggage drop counter, method of modifying a baggage drop counter and a retrofit baggage drop system operable in an assisted state or in a passenger operable state.

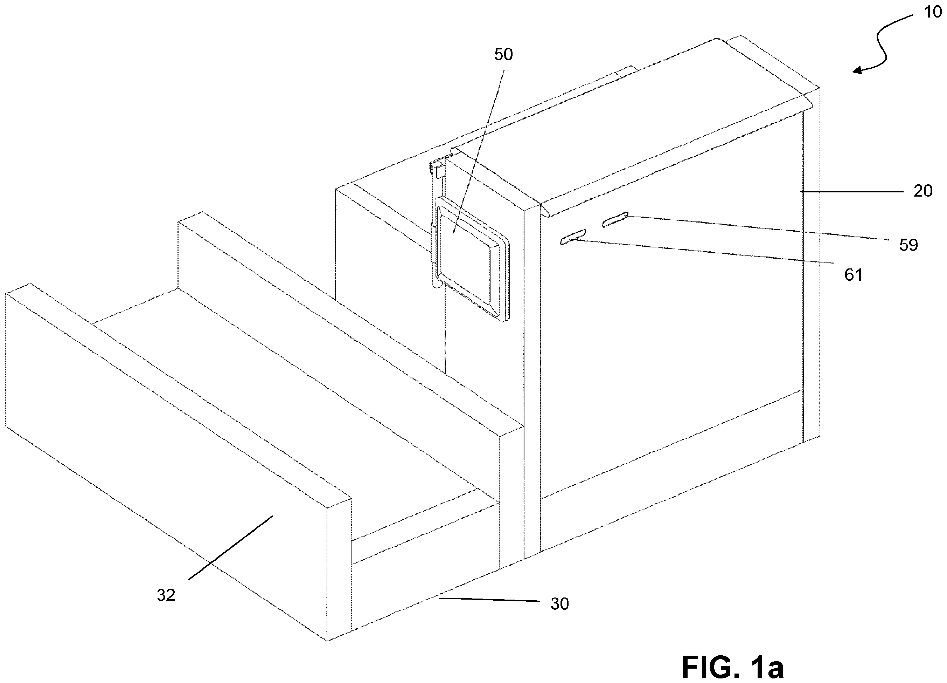

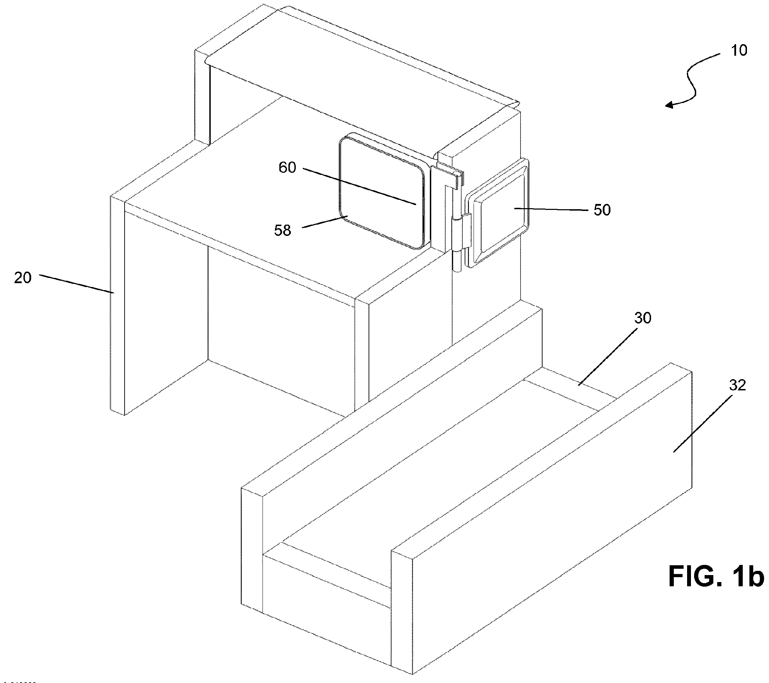

Reference is made to Figs. 1a and 1b in which the baggage drop system is depicted in an assisted check-in configuration. The baggage drop system **10** depicted includes a housing **20** located adjacent a conveyor system **30.** Not shown, and omitted for clarity are the monitor and computer system which is used by a staff member assisting the passenger to check-in and/or drop baggage when the baggage drop system is in the state shown.

As is known in the art, a typical check-in counter or system works by a passenger approaching a staff member stationed behind the housing **20.** The passenger produces identification documents (such as a passport) and booking information to the staff member. Upon verification of the passengers' identity, a boarding pass may be printed from a printer (not shown) and provided to the passenger.

Furthermore, as is known in the art, once the passenger information and boarding pass have been produced, the staff member can verify that the baggage meets pre-determined weight limits using the weighing scale **32** included in the conveyor system. Once the baggage is determined to fall within the pre-determined limits, it is despatched on the conveyor system by the operation of the agent or staff member behind the counter. It would be appreciated in this configuration (assisted check-in configuration), the additional retrofit passenger operable baggage drop system of which several integers are visible in Figs. 1 a and 1 b is in an inoperative position.

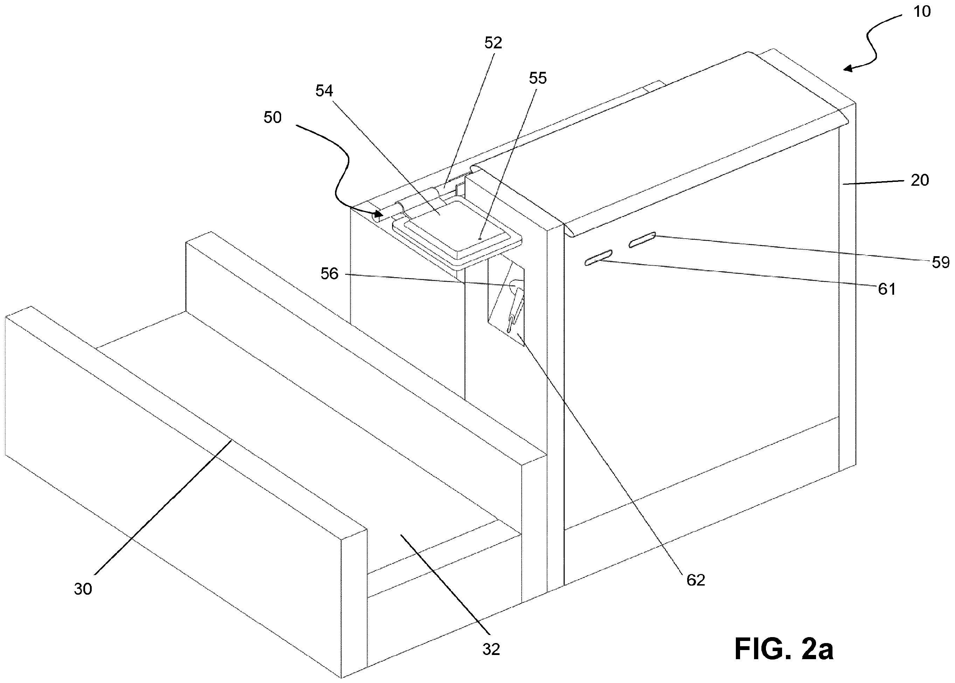

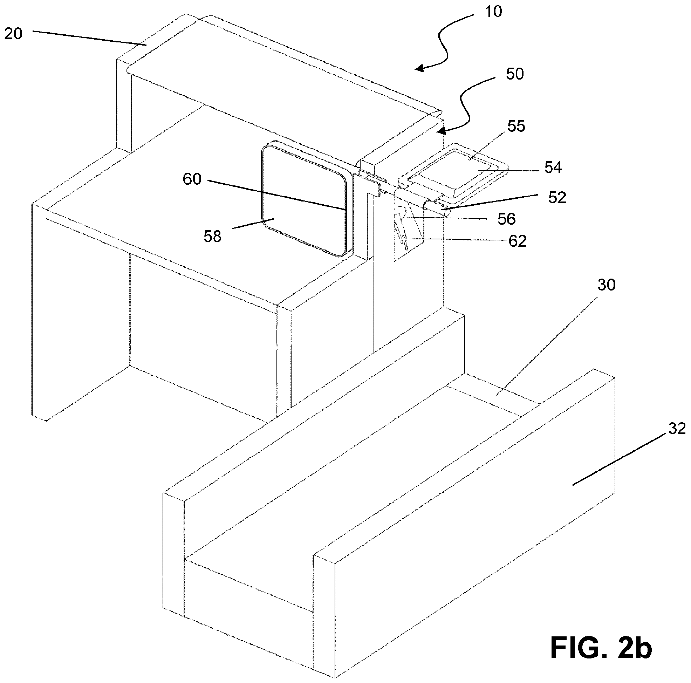

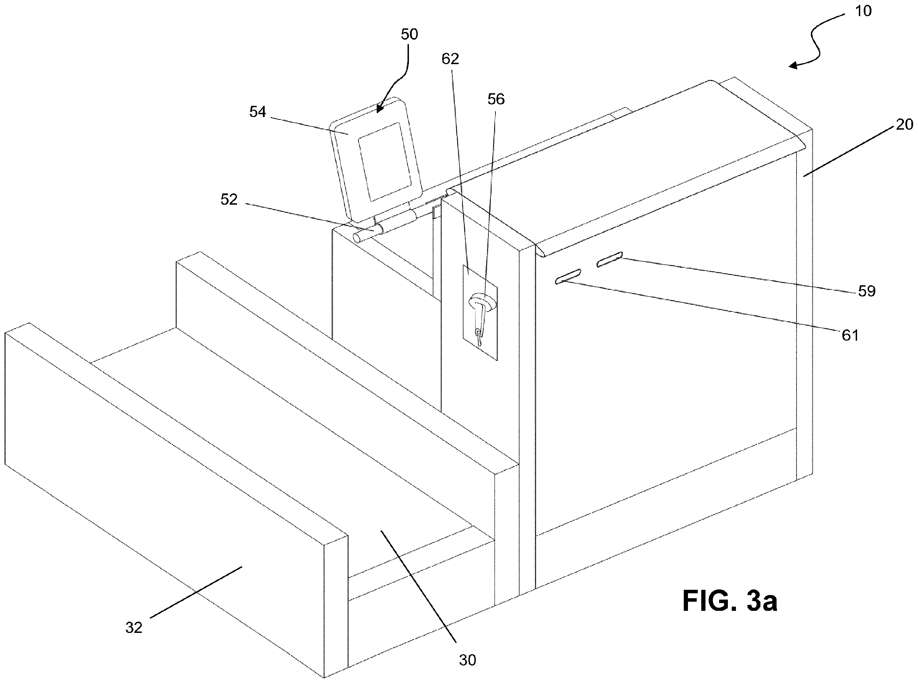

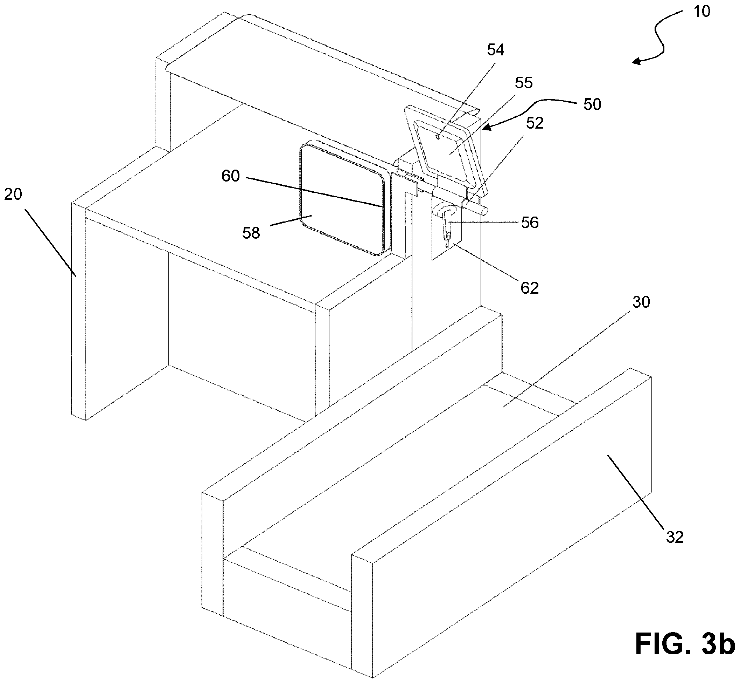

Referring now to Figs. 2a and 2b, passenger and staff member perspective views of the system according to an embodiment of the present invention are depicted. As depicted, the system is in the process of being changed from the assisted check-in configuration depicted in Fig. 1 to the passenger operable baggage drop system/counter depicted in Fig. 3.

It can be seen that the passenger operable system **50** in the embodiment depicted has a movable display arm **52** which has been unfolded from the initial position depicted in Figs. 1a and 1b to extend above the conveyor system **30.** On the display arm in the embodiment depicted, the display **54** is also rotatably mounted to the display arm **52.**

The display **54** may be a touch screen LCD display, which is configured to show passengers the various stages in the baggage drop process as well as to receive passenger inputs. For example, at various stages in the process, the passengers may be asked to provide input, such as selecting the language of operation, verifying that there are no dangerous goods in the baggage and responding to system questions. Optionally error messages may also be displayed on the display.

The scanning device **56** may be used to read passenger supplied information - in the form of a pre-printed boarding pass, a QR code, or a bar code contained on a portable electronic device or any other type of indicia which may be scanned.

Passenger inputs from the display **54** and/or the scanning device **56** may be communicated to a computing means (not shown) which is able to interface with the airport and/or airline computer systems.

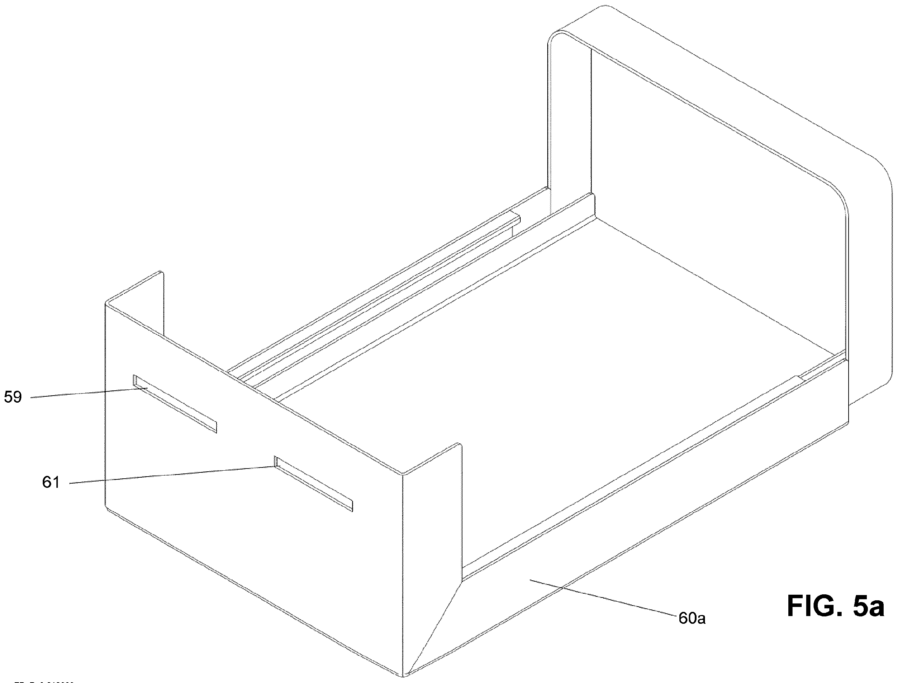

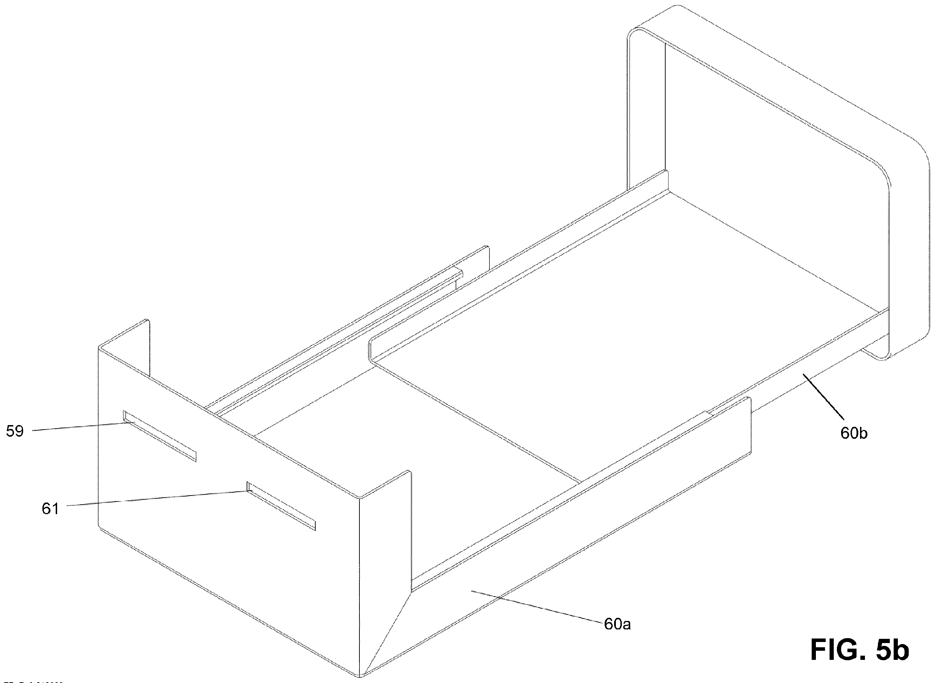

Also attached to the computing means, conveniently located in the embodiment depicted is a baggage label printer **58** which is enclosed in a movable printer drawer **60.** The printer drawer **60** is further depicted in Figs.5a and 5b. It can be seen that the scanning device **56** is contained in a recess **62** which is easily able to be activated by a passenger.

It would be appreciated that in the transitional configuration depicted in Figs. 2a and 2b, the scanning device **56** in the recess **62** is progressively uncovered by the unfolding and movement of the display arm **52** and attached display **54.**

Referring now to Figs. 3a and 3b, it can be seen that the system depicted in Figs. 1 a and 1 b, has moved through the transitional state shown in Figs. 2a and 2b to a passenger operable state which is depicted in Figs. 3a and 3b.

Advantageously, the electrical connections to the display **54,** computer networks and conveyor systems may also be transitioned between states through activation of a single switch located on the staff member side (not shown).

Upon unlocking a locking knob (not shown) the display arm **52** has been pivoted out away from the housing to extend above the conveyor system **30.** In this position, the display **54** has been rotated about the display arm **56** into an upright position. When the display **54** is in this position, the scanning device **56** in the recess **62** is able to be grasped by a passenger to scan/encode passenger information.

In the embodiment depicted, there is shown a small camera **55,** located on the rear side of the display panel **54.** Advantageously, this camera (image acquisition device) is located and configured to automatically capture an image of successfully tagged baggage, prior to despatch of the baggage to the main trunk conveyor system **37.** The image thus captured may be associated with passenger information provided to the baggage drop system, for retrieval if required in due course. In particular, the image of the tagged baggage may be used to identify, misplaced/mishandled baggage, or to provide evidence of the state of the baggage when checked in the event of a claim for damage to that baggage.

The baggage label printer **58** in the printer drawer is aligned with slots **59** and **61** in the housing **20.** Accordingly, once a passenger has provided passenger information (e.g. a boarding pass printed at another kiosk or at the home of the passenger, or stored on a portable electronic device), and the baggage meets pre-determined weight and size limits, the label for attachment by the passenger to the baggage may be printed. This label may be printed by the baggage label printer **58** in such a way that the label (including appropriate sticky attachment) are extruded through the slots **59** and **61** in the housing **20.**

Once the passenger is clear of the conveyor system, or upon the passage of a pre-determined amount of time, the system may actuate the conveyor system to remove the baggage from the check-in counter. Optionally a warning notification may be displayed on the display **54,** prior to activation of the conveyor system.

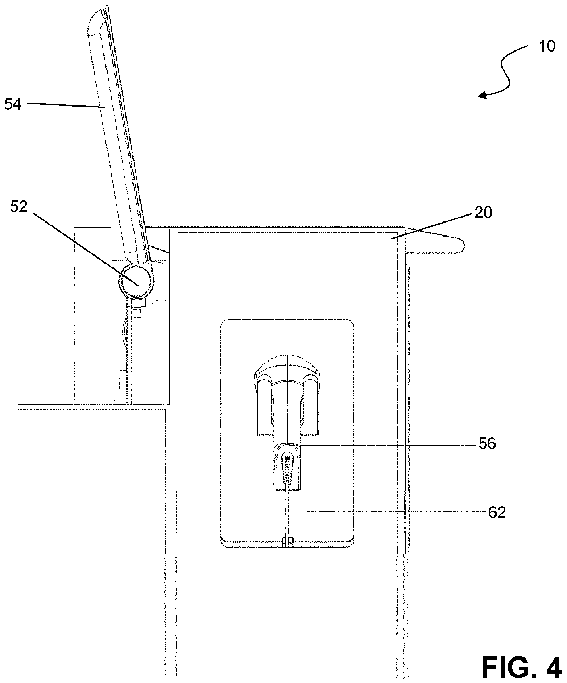

Referring now to Fig. 4, it can be seen that the baggage drop system **10** is depicted in a side view orientation in a self check-in configuration, with the conveyor system removed for clarity. The housing **20** includes a recess **62** for receiving a scanning device **56** therein. The display **54** is mounted to the display arm **52** which extends above the conveyor system **30** (not shown).

The side view of the printer drawer **50,** containing therein the baggage label printer **58** is also shown.

Referring now to Figs. 5a and 5b, there is shown an exemplary printer drawer for inclusion in the housing **20.** As depicted, the passenger facing side of the printer drawer includes two slots **59, 61,** which are arranged to interface with a baggage label printer and baggage receipt printer (not shown) and with corresponding slots in the housing **20.**

In the embodiment depicted, the drawer comprises two units **60a** and **60b** which are slideable relative to each other. Being able to slide the printers enables easy replacement of the printers, ink, and paper consumables. It would be appreciated that other arrangements of the printer drawer could be also provided.

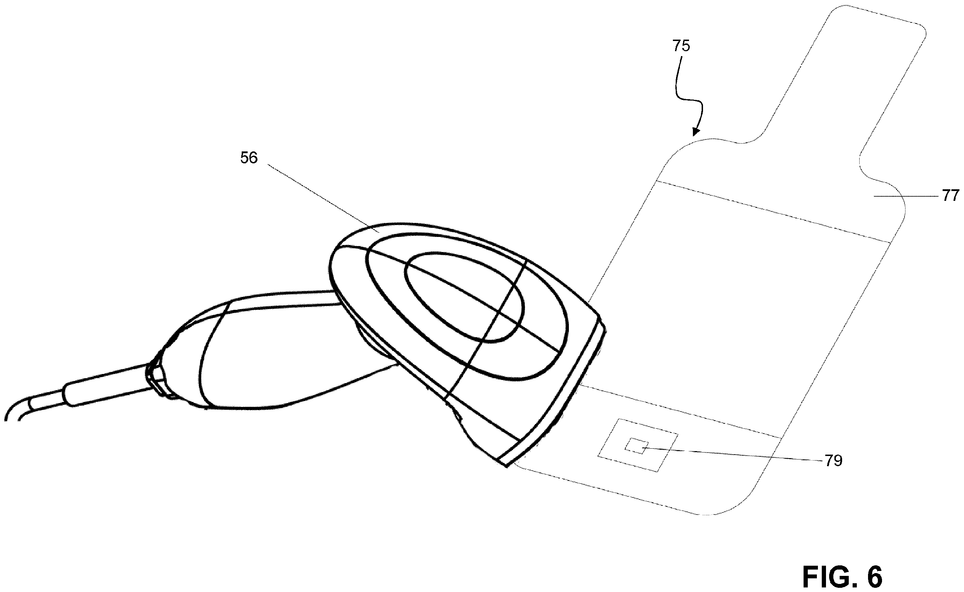

Referring to Fig. 6 there is a depicted an exemplary scanning device **56** with an embodiment of a baggage tag suitable for use with embodiments of the baggage drop system

As used herein, and in the embodiment depicted, there is shown a baggage tag **75** comprising a pouch **77** including an RFID encodable chip **79.** The baggage tag **75** shown is configured to include readable indicia encoding passage/passenger information which is readable by both human and computer systems

The scanning device **56** may be configured to read passenger provided information (either in the form of a passenger printed tag, QR code, image on a personal electronic device or the like); and also perform an encoding function of the chip memory which can interface with the scanner. A person skilled in the art would appreciate that such chip memory may be an RFID tag, memory chip or similar without departing from the scope of this embodiment of the invention.

Specifically, upon retrieving relevant passenger information, and determining the baggage meets the pre-determined limits, the scanner can be configured to encode an RFID baggage identification tag with relevant information.

This is an alternative mode of operation to using only a printed baggage label which is described in detail above, and requires only a slight modification to the steps/ equipment described in the present application. In this configuration an additional printer for the baggage label becomes optional, with the scanner used being able to encode the RFID tag as well as to read passenger provided information. Other steps in the interaction by the passenger with the system in the passenger operable mode remain the same.

A memory store such as an RFID tag may be included in the pouch 77 with a baggage label which is able to be printed at home by the passenger, hence obviating the need for an additional printer to be provided at check-in. Inclusion of an encoded baggage tag and paper label can therefore be effected at the point of the baggage drop.

This encoded tag may be included in a baggage label which is able to be printed at home by the passenger, hence obviating the need for an additional printer to be provided at check-in. In one embodiment where the baggage tag is an RFID tag, the RFID tag can allow an airport with appropriate equipment to determine the location of the specific item of baggage through network based monitoring, as well as by the persons involved in the movement of baggage throughout the airport.

The RFID tag may also allow an airport with appropriate equipment to determine the location of the specific item of baggage through network based monitoring, as well as by the persons involved in the movement of baggage throughout the airport.

This is an alternative mode of operation to the printed baggage label which is described in detail in the embodiments set out above, and requires only a slight modification to the steps/ equipment described in the present application. In this configuration an additional printer for the baggage label becomes optional, with the scanner used being able to encode the baggage tag (e.g. RFID tag or other encodeable memory device) as well as to read passenger provided information. A single printer may be included in the system used by the passenger to check in the baggage to provide a baggage check receipt. Alternatively, no printer may be included, with electronic records only stored by the system.

Other steps in the interaction by the passenger with the system in the passenger operable mode remain generally the same.

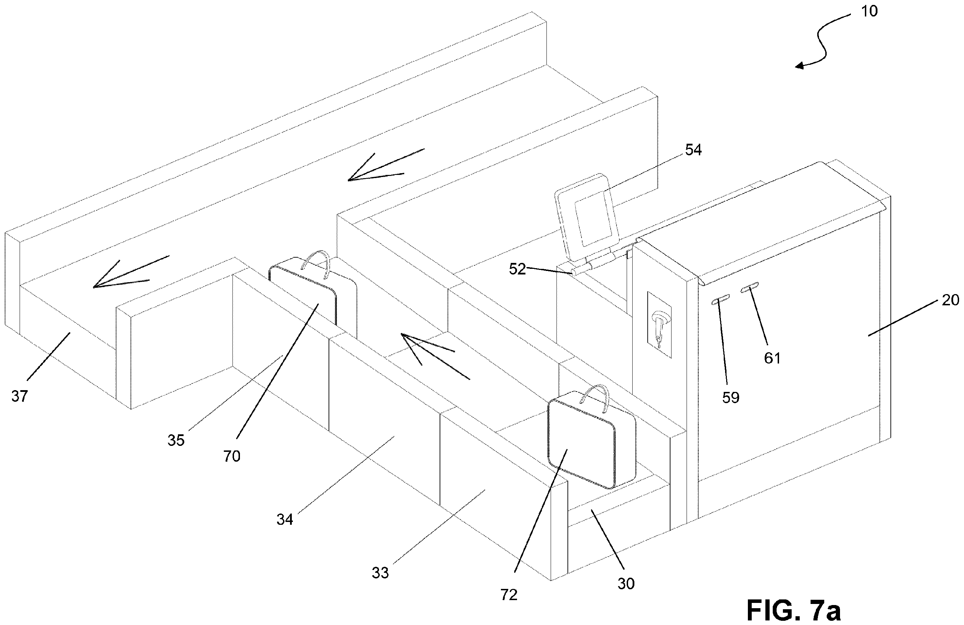

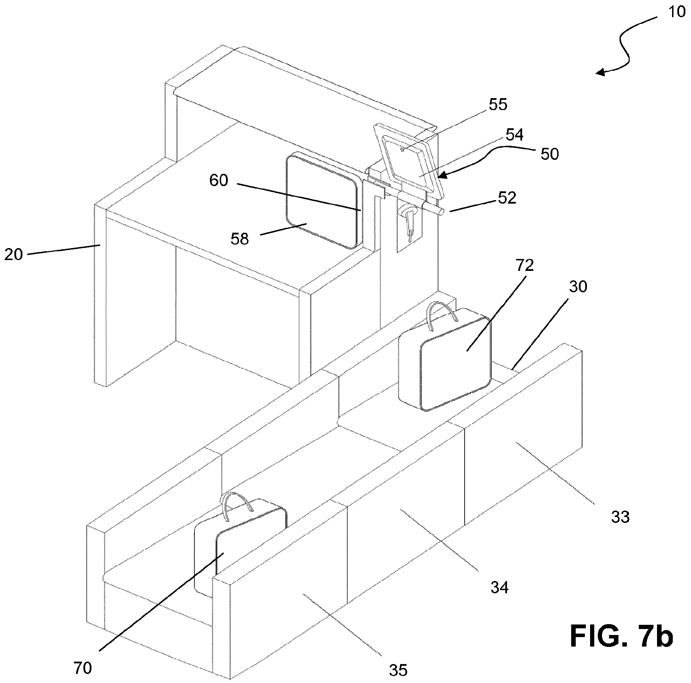

Reference is now made to Figs. 7a and 7b, which depict an exemplary embodiment of the baggage drop system in which there are three separately actuable conveyor systems. The first conveyor system **33** includes therein a scale **32** which are able to detect baggage parameters (including size and weight of a first baggage item **70** placed upon that conveyor system **33**)**.**

In the embodiment depicted, the first item of baggage **70** has proceeded over the second conveyor system **34** to the third conveyor system **35** after being tagged by a passenger.

The passenger has then introduced a second baggage item **72** and is in the process of preparing a baggage tag for this item.

It would be appreciated that although three separate conveyor systems have been depicted for the baggage reaches the main trunk conveyor **37,** other arrangements including further additional conveyor systems would also be possible without departing from the scope of the present invention.

However, the advantage of the embodiment of the invention depicted is that if the second or further item of baggage is determined to exceed pre-determined weight, size or other limits, the first item of baggage may be retrieved by the system and the passenger can proceed to staff assisted to check in. This may be compared to other prior art systems where once the item of baggage has been processed, it is transported to a main trunk conveyor system even before detection that the second item of baggage exceeds pre-determined parameters.

As can be appreciated, the arrangement of the present invention overcomes the deficiencies of such previous prior art systems in which there is no way to retrieve the first item of baggage if the second or subsequent items of baggage exceed pre-determined parameters.

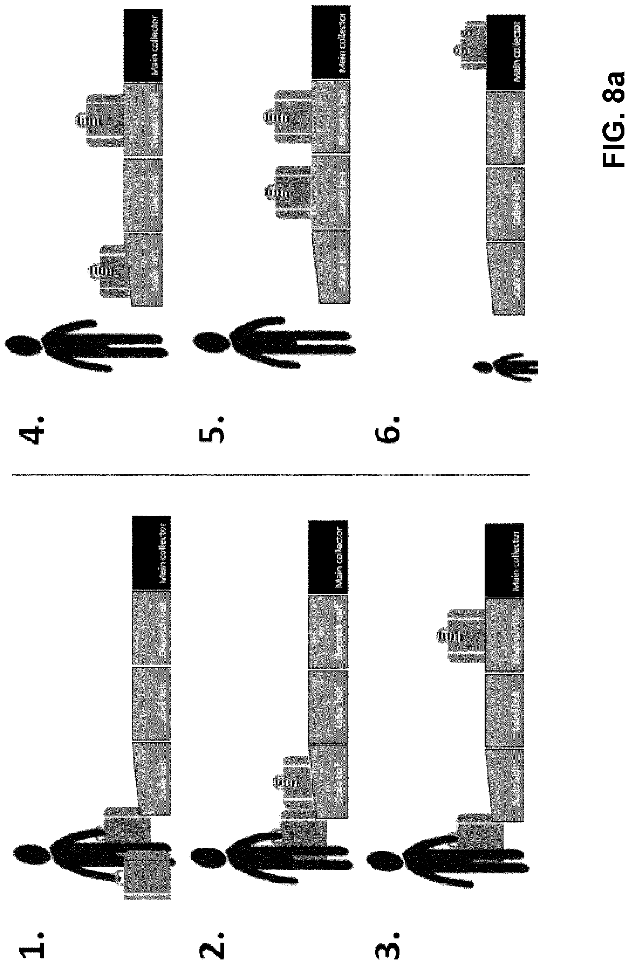

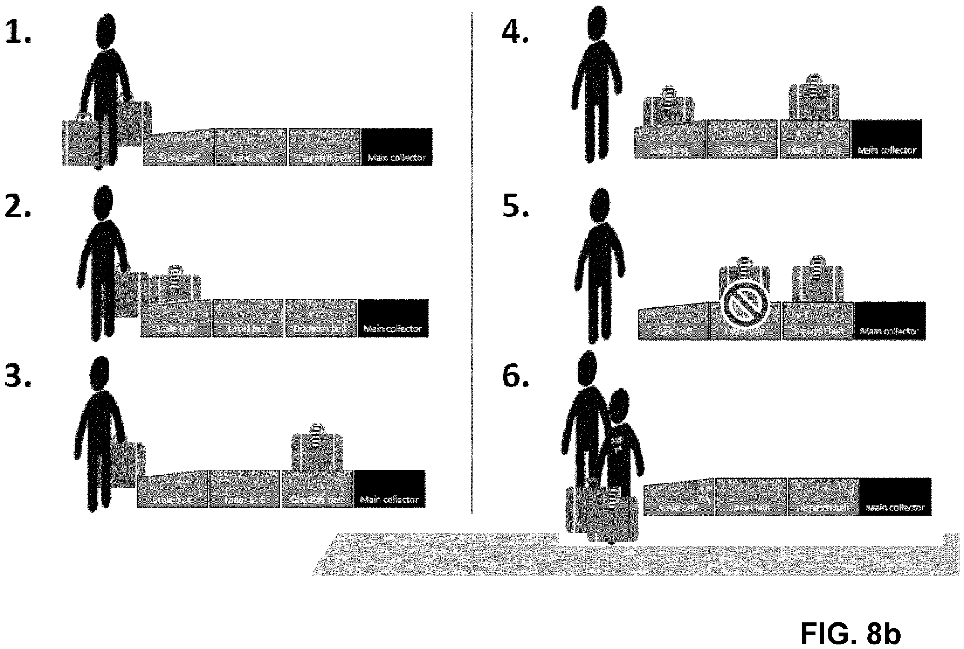

This process according to an embodiment of the present invention can be understood with ready reference to the arrangements depicted in Figs. 8a and 8b. These arrangements depict the various modes of operation of the conveyor system of Figs. 7a and 7b. The three conveyor systems **33, 34,** 35and **37** are shown.

As shown at Step 1, a passenger arrives at the baggage check in with multiple items of baggage. Upon weighing and tagging the baggage at Step 2, the first conveyor system **33** and second conveyor system are actuated to transport the baggage to the third conveyor system **35** at Step 3. At Step 4, the second baggage item is placed on the first conveyor system weighed and tagged and then it proceeds to the second conveyor system in Step 5. The passenger then is able to leave the system as shown in Step 6.

Referring to Fig. 8b, a similar scenario occurs, where a passenger arrives with multiple items of baggage. However, in this case the second baggage item is detected at Step 5 to exceed the pre-determined baggage parameters. Assistance is required to return the first and second baggage items to the passenger at Step 6 to proceed to agent assisted baggage drop potentially including further payment of baggage fees.

It would be appreciated that detector (such as an infrared detector) may be located on either side of the conveyor system or at the housing of adjacent check-in counters to detect if baggage exceeds pre-determined size limits. Together with weight information obtained from scale **32** located under the conveyor system, these sensors can provide information in either or both the self check-in baggage or assisted baggage arrangement.

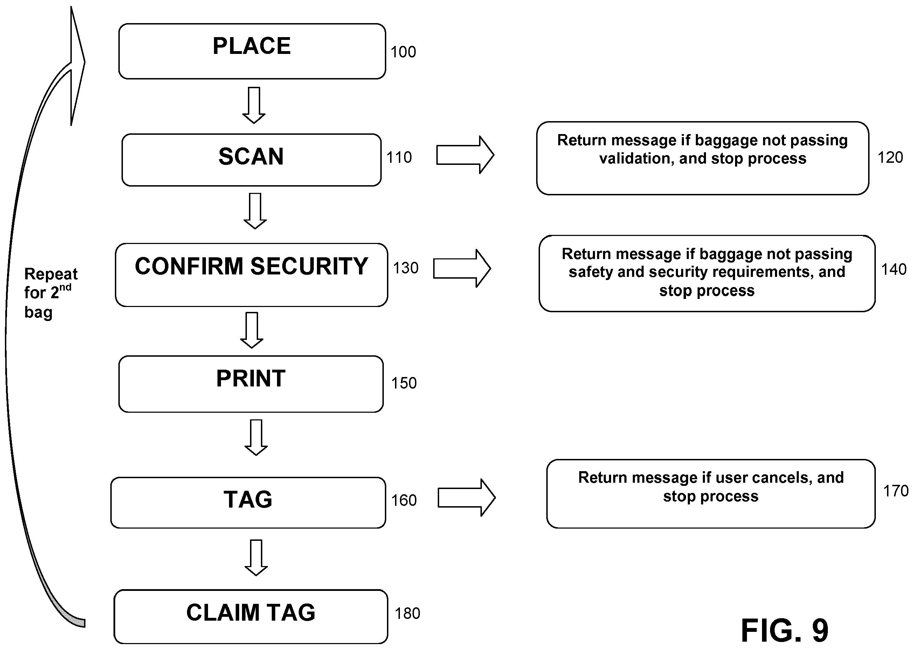

Referring to Fig. 9, the steps involved in using the baggage drop system according to embodiments depicted in Figs. 1 to 8 are set out for when the baggage drop system is in the self bag drop configuration.

At Step **100,** the passenger places a first item of baggage on the first conveyor system. Next, at Step **110,** the passenger scans identification information - which may be in the form of a paper print out previously obtained by the passenger from their home computer system, or from an independent kiosk located in the transport hub (e.g. airport). In yet a further alternative, the scanner may be configured to read and detect passenger information displayed as a QR code, or on the screen of a portable electronic device such as a smart phone or computer system.

If the passenger has missed the flight or transportation baggage cut-off time, or they have not been found on the system, or in another error condition; the bag may be rejected and the process of baggage drop terminated at Step **120.**

In an effort to comply with various baggage requirements, it may be necessary to prompt the passenger at Step **130** to confirm that the baggage does not contain dangerous items. In the event that no or an inappropriate response is received to the prompt displayed on the display, the baggage drop process may be terminated at Step **140.**

Alternatively, once the security questions have been answered appropriately, a baggage tag may be printed at Step **150** and affixed by the passenger at Step **160** to the baggage.

Upon actuation by the user or after a pre-determined amount of time, the baggage item may be moved onto a further conveyor, for entrance into the main conveyor system. Alternatively, the user may choose to cancel the process at Step **170** and terminated the baggage drop process.

Finally, at Step **180,** a baggage claim tag may be printed for the passenger to retain.

If the passenger has further items of baggage to check in, the process starts again from Step **100.** If at any stage during the process the bag is detected to exceed pre-determined limits, a warning message may be displayed on the display and the staff member monitoring the bag drop system may be contacted by the system to attend to the passenger.

For example, if the bag is detected to be in excess weight or exceeding pre-determined size limits, the further activation of the conveyor system may be prevented. Passengers with baggage fulfilling this condition may be required to proceed to a manual check-in operation.

Notifications to the user can be displayed at various points of the process on the display, including animations as to how to proceed with the check-in system, tagging of the baggage item, and notification that the conveyor is about to commence. Other behavioural messages may also be displayed, reminding the passenger to pick up the claimed tag after the baggage has been dispatched and to wish the passenger a pleasant journey etc.

Advantageously the improved baggage drop system of the present invention provides for efficient operation of existing airport infrastructure, allowing airport infrastructure to operate in either agent assisted check in and baggage drop off mode, or in passenger operated baggage drop off mode. The ability to rapidly switch between these modes of operation means that an airport can rapidly initialise and deploy additional baggage drop facilities in the event of an unexpected surge of passenger numbers or at times of peak capacity.

In the exemplary embodiment of the invention described, the change-over between modes can be rapidly carried out by actuation of a single switch and movement of the passenger operable display system from an inoperative position to an operable positon.

As would be appreciated by a person skilled in the art, when the improved baggage system and method of the present invention are operating in passenger operable mode it can provide for a photographic record of the baggage deposited in the system, which is useful in the event of subsequent baggage damage or loss.

As the present invention enables effectively two systems to operate independently within each check-in counter, it increases the redundancy in the baggage drop/checking in process, thereby increasing the ability of a transport services provider such as an airport to operate each counter in the event of a malfunction or breakdown of any equipment.

The use of sensors placed either on the housing or on the conveyor systems to prevent the inclusion of baggage exceeding pre-determined limits maintains the integrity of the baggage drop system.

Advantageously in the embodiments of the invention described above, the inclusion of multiple independently actuable conveyor systems enables a passenger who attempts to check in multiple items of baggage, and retrieve items of baggage before they are taken away by the conveyor system in the circumstances where the passenger exceeds pre-determined limits.

It would be appreciated that as compared to other prior art systems, the embodiments of the present invention discussed take up minimum additional space, while at the same time providing both assisted and self check in modes. In the assisted mode, the systems associated with the self check in mode minimally intrude on the passenger experience, with the recessed scanning device hidden by the movable display on the display arm.

## Claims

1. A baggage drop system for receiving baggage from a passenger comprising:
a housing adjacent a conveyor system for receiving baggage, and including first and second systems, wherein:
said first system is operable by the passenger to generate a baggage identification tag upon receipt of passenger information, and to actuate the conveyor system upon determination that baggage parameters are within pre-determined limits;
said second system is operable by a second person to generate a printed baggage label upon receipt of passenger information, and being operable by the second person to actuate the conveyor system;
wherein the first system and the second system are independently operable.

2. The baggage drop system according to claim 1 wherein the first system includes a display movable from an inoperative position proximal the housing to an operational position above the conveyor system.

3. The baggage drop system according to claim 2 wherein an image acquisition device is mounted to the display such that when the display is in an operational position the image acquisition device captures an image of the baggage.

4. The baggage drop system according to any one of the preceding claims including a recess in the housing for a scanner, wherein the housing is configured such that the display is arranged in an inoperative position to substantially cover the recess and scanner.

5. The baggage drop system according to claim 4 wherein the scanner is configured to detect passenger information and to encode passenger information on the baggage identification tag.

6. The baggage drop system according to claim 5 wherein the baggage identification tag comprises a pouch for receiving a printed baggage label and an encodeable RFID tag.

7. The baggage drop system according to any one of the preceding claims wherein the conveyor system includes three independently actuable belts, and wherein a first item of baggage on a second conveyor belt is returned to the passenger where the combined parameters of the first item of baggage and second item of baggage exceed a pre-determined limit detected by detectors mounted to the housing.

8. The baggage drop system according to any one of the preceding claims wherein upon actuation of a switch one of the first system and second system is rendered inoperable and the other is activated so the first system and the second system are independently operable at different times.

9. A baggage drop counter for receiving baggage from a passenger comprising:
a housing adjacent a conveyor system for receiving baggage;
a first display mounted to the housing, the first display being movable from a passenger operable position above the conveyor system to an inoperative position proximal the housing;
a first scanner disposed in the housing for receiving passenger identification information;
a computing means for receiving passenger information and detecting baggage weight and size information from sensors and upon determination that the baggage parameters fall below pre-determined limits, actuating the conveyor system;
a baggage identification tag generator operable by a passenger;
a second display arranged for displaying information to a second person;
a second computing means for receiving passenger information; and for enabling the second person to actuate the conveyor system;
a printer for generating a printed baggage label, baggage receipt and boarding pass information upon selection by a second person; and
a switch for changing the baggage drop system from the first system to the second system.

10. The baggage drop counter for receiving baggage from a passenger according to claim 9 wherein the baggage identification tag generator includes a baggage label printer operable by a passenger.

11. The baggage drop counter for receiving baggage from a passenger according to claim 9 or claim 10 comprising a scanner configured for detecting passenger information and encoding a memory device in the baggage identification tag.

12. A method of modifying the operation of a baggage drop counter having a housing and a conveyor system, so that the baggage drop counter provides passenger operable baggage drop operation and assisted baggage drop operations at separate times, the method comprising:
installing a display movable between an operative position above the conveyor system and an inoperative position proximal the housing; and
providing a computing means connected to network information, and configured to receive passenger information and baggage parameters, and generate a baggage identification tag.

13. The method of modifying the operation of a baggage drop counter according to claim 12 wherein a baggage identification tag includes a label generated by a label printer in the housing accessible to a passenger.

14. A retrofit baggage drop system for use with an existing baggage counter, the existing baggage counter having a housing adjacent a conveyor system for receiving baggage, and comprising an existing display, a baggage label printer and a computer, the retrofit baggage drop system comprising:
a system operable by the passenger to generate a baggage identification tag upon receipt of passenger information, said system actuating the conveyor system upon determination that baggage parameters are below pre-determined limits;
a second display mounted to the housing, the second display being movable from a passenger operable position above the conveyor system to an inoperative position proximal the housing;
wherein the existing system and the system operable by the passenger are independently operable.

15. The retrofit baggage drop system according to claim 14 further comprising:
a scanner disposed in the housing for receiving passenger identification information;
a computing means for receiving passenger information and detecting baggage weight and size information from sensors and upon determination that the baggage parameters fall below pre-determined limits, actuating the conveyor system; and
a second printer for generating a printed baggage label for a passenger upon selection by a passenger.
